Europäisches Patentamt

European Patent Office

Office européen des brevets

(19)

(11) Veröffentlichungsnummer: **0 043 079**
**B1**

# EUROPÄISCHE PATENTSCHRIFT

(12)

(45) Veröffentlichungstag der Patentschrift:
11.09.85

(51) Int. Cl.⁴: **G 01 N 35/02**

(21) Anmeldenummer: **81104833.9**

(22) Anmeldetag: **23.06.81**

(54) **Automatisches Analysegerät.**

(30) Priorität: **25.06.80 SE 8004687**

(43) Veröffentlichungstag der Anmeldung:
**06.01.82 Patentblatt 82/1**

(45) Bekanntmachung des Hinweises auf die Patenterteilung:
**11.09.85 Patentblatt 85/37**

(84) Benannte Vertragsstaaten:
**AT CH DE FR GB IT LI SE**

(56) Entgegenhaltungen:
**DE - A - 3 016 284**
**US - A - 3 537 794**
**US - A - 3 756 783**
**US - A - 3 917 455**
**US - A - 3 985 508**
**US - A - 4 039 288**

(73) Patentinhaber: **ELECTRO-NUCLEONICS, INC.,**
**368 Passaic Avenue P.O. Box 803, Fairfield,**
**NJ 07006 (US)**

(72) Erfinder: **Berglund, Erling, Hällvägen 5, S-175 40 Järfälla**
**(SE)**

(74) Vertreter: **Carminger, Lars, CARMINGER & UUSITALO**
**PATENTBYRA AB Box 3554, S-103 69 Stockholm (SE)**

## Beschreibung

Die vorliegende Erfindung betrifft ein automatisches Analysegerät zur Analyse von Flüssigkeitsproben, insbesondere biologischer Flüssigkeitsproben, wie beispielsweise Blutserum. Das Gerät ist von der im Oberbegriff des Anspruchs 1 angegebener Art.

In der modernen Medizin wird eine große Zahl verschiedener Proben den Patienten entnommen und auf verschiedene Eigenschaften hin untersucht. Die Zahl der Proben, die zur Versorgung der Patienten entnommen werden muß, ist sehr hoch und steigt ständig. Es besteht daher ein Bedarf nach einem automatisch arbeitenden klinischen Analysegerät, das in der Lage ist, verschiedene Analysen an einer großen Zahl verschiedener Proben auszuführen. Eine gemeinsame Eigenschaft einer großen Zahl derartiger Analysen besteht darin, daß bestimmte Reagenzflüssigkeiten, Pufferlösungen und/oder flüssige Lösungsmittel, die im folgenden insgesamt mit dem allgemeinen Begriff »Reagenzflüssigkeiten« bezeichnet werden, der ursprünglichen Probe zugesetzt werden müssen und daß, anschließend an die Zugabe dieser Reagenzflüssigkeiten, die Probe für eine bestimmte Wartezeit (Inkubationszeit) auf einer kontrollierten Temperatur gehalten werden muß, bevor sie einem analytischen Meßprozeß unterzogen wird, um dadurch das Vorhandensein einer bestimmten biologischen Substanz in der Probe festzustellen. Der Meßprozeß besteht meistens in einer photometrischen Messung. Die Reagenzflüssigkeiten, die der Probe zugegeben werden, ihre Konzentrationen und die Inkubationszeiten vor Ausführung der analytischen Messung sind dabei bei verschiedenen Analysen unterschiedlich, je nachdem, welche biologische Substanz in der ursprünglichen Probe bestimmt werden soll. Die heutzutage verfügbaren automatisch arbeitenden klinischen Analysegeräte können im wesentlichen in zwei Kategorien unterteilt werden. Ein Typ eines automatisch arbeitenden klinischen Analysegerätes ist das sogenannte Mehrkanalgerät, das eine Mehrzahl von verschiedenen, parallel und simultan betriebenen Analysekanälen aufweist, deren jeder zur Durchführung einer bestimmten im zugewiesenen Analyse eingerichtet ist, d. h. dazu, die Gegenwart einer bestimmten biologischen Substanz zu bestimmen. Die verschiedenen Proben werden dem Gerät nacheinander zugeführt und jede Probe wird automatisch in Teilproben aufgeteilt, die jeweils dem zugeordneten Analysekanal zugeführt werden, je nachdem, welche spezifischen Analysen an der fraglichen Probe durchgeführt werden sollen. Die Probe ist häufig durch eine entsprechende Codierung auf dem Probenbehälter gekennzeichnet. Obwohl ein derartiges parallel betriebenes Analysegerät eine sehr hohe Kapazität hat, wenn eine verhältnismäßig große Analysenzahl pro Probe durchgeführt werden soll, wird das Gerät andererseits groß und kompliziert im Aufbau und somit teuer. Da die Zahl der parallelen Analysekanäle in dem Gerät notwendigerweise beschränkt ist, ist es dennoch trotz allen Aufwandes nur möglich, eine relativ beschränkte Zahl verschiedener Analysen durchzuführen, ohne daß die verschiedenen Analysenkanäle neu eingerichtet werden müssen bezüglich der ihnen zugeführten Reagenzflüssigkeiten und der Reaktionszeiten. Dieses Neueinrichten der Analysekanäle zur Durchführung einer von der vorhergehenden verschiedenen Analyse erfordert ausgebildetes Personal und ist relativ zeitaufwendig.

Ein anderer Typ eines automatisch arbeitenden klinischen Analysegerätes ist das sogenannte seriell arbeitende oder Einkanalgerät. Ein derartiges Gerät hat nur einen Analysekanal, der dazu eingerichtet ist, eine einzige bestimmte Analyse durchzuführen. Die Proben werden dem Gerät nacheinander zugeführt und auch nacheinander der bestimmten Analyse unterworfen, für die das Gerät eingerichtet ist. Ein derartiges einkanaliges Analysegerät ist relativ einfach aufgebaut, kostengünstig und benötigt nur relativ wenig Raum. Die Verarbeitungskapazität eines derartigen Gerätes ist allerdings gering und das Gerät ist nur in der Lage, eine bestimmte Analyse an allen ihm zugeführten Proben durchzuführen. Wenn die Proben einer anderen Analyse unterworfen werden sollen, so ist es notwendig, das Gerät für diese Analyse neu einzurichten. Wenn also eine Probe auf eine Mehrzahl von verschiedenen Bestandteilen hin analysiert werden soll, so muß die Probe zuerst in eine Reihe von Teilproben geteilt werden, die zu verschiedenen Zeitpunkten dem Gerät zugeführt werden. Dann muß das Gerät jedesmal, wenn eine von der vorhergehenden verschiedene Analyse ausgeführt werden soll, neu eingerichtet werden. Ein derartiges Gerät bedarf folglich einer aufwendigen Probenvorbereitung, bevor die Proben dem Gerät zugeführt werden und das Gerät muß wiederholt manuell neu eingerichtet werden. Ein bekanntes Gerät dieser Art ist beispielsweise in der Patentschrift US-A-3 758 274 beschrieben.

Einkanalgeräte sind auch bekannt, die derart eingerichtet sind, daß mehrere verschiedene Analysen automatisch wählbar durchgeführt werden können. Ein solches bekanntes Einkanalgerät der im Oberbegriff des Anspruchs 1 angegebenen Art ist beispielweise in der Patentschrift US-A-3 917 455 beschrieben. Auch diese bekannten, für mehrere verschiedene, automatisch wählbare Analysen eingerichteten Einkanalgeräte ermöglichen jedoch nur eine verhältnismäßig geringe Anzahl verschiedener Analysen und können die Proben nur in einer vorbestimmten Reihenfolge behandeln.

Aufgabe der vorliegenden Erfindung ist es deshalb, ein automatisches Analysegerät gemäß Oberbegriff des Anspruchs 1 zur Verfügung zu stellen, das relativ einfach aufgebaut ist, relativ kostengünstig herzustellen ist und einen verhältnismäßig geringen Raumbedarf hat und das dennnoch eine große Vielseitigkeit aufweist, d. h. eine sehr große Anzahl von verschiedenen, automatisch wählbaren Analysen durchführen kann, und auch eine verhältnismäßig große Leistung besitzt, d. h. eine große Anzahl von Proben pro Zeiteinheit behandeln kann. Weiter soll das Analysegerät derart ausgebildet sein, daß es die im Gerät zugeführten Proben in einer beliebigen wählbaren Reihenfolge behandeln

0 043 079

kann, und so daß sowohl mehrere verschiedenen Proben derselben Analyse unterworfen werden können als auch eine einzige Probe mehreren verschiedenen Analysen unterworfen werden kann.

Diese Aufgabe wird erfindungsgemäß gelöst durch ein automatisches Analysegerät der im Oberbegriff des Anspruches 1 angegebenen Art, in welchem Steuereinrichtungen vorgesehen sind, mittels derer die Probenzufuhreinrichtung derart gesteuert ist, daß sie eine flüssige Probe wahlweise von jedem beliebigen aus der Mehrzahl von Probebehältern dem Reaktionsbehälter zuführen kann, mittels derer die Reagenzzugabestation derart gesteuert ist, daß sie die Reagenzflüssigkeit wahlweise von jedem beliebigen der Reagenzbecher einem der Reaktionsbehälter zuführen kann, wenn der Reaktionsbehälter vom Drehtisch in eine bestimmte Position relativ zu der Reagenzzugabestation bewegt ist, und mittels derer die Antriebseinrichtung des Drehtisches und die Meßeinrichtung der Meßstation derart gesteuert sind, daß jeder Reaktionsbehälter vom Drehtisch durch eine Mehrzahl von vollständigen Umdrehungen des Drehtisches bewegt wird, bevor die in dem Reaktionsbehälter befindliche Flüssigkeit der analytischen Messung durch die Meßeinrichtung unterworfen wird, und zwar so, daß jeder Reaktionsbehälter während dieser Mehrzahl von Umdrehung des Drehtisches mindestens zweimal in eine solche Position relativ zu der Probenzugabestation bzw. der Reagenzzugabestation gebracht wird, die es ermöglicht Probenflüssigkeit bzw. Reagenzflüssigkeit dem Reaktionsbehälter zuzugeben, und daß die Probenzugabestation und die Reagenzzugabestation Probeflüssigkeit bzw. Reagenzflüssigkeit jedem der verschiedenen Reaktionsbehälter zu mindestens zwei verschiedenen Zeitpunkten zugeben kann, bevor die Flüssigkeit in dem Reaktionsbehälter der analytischen Messung durch die Meßeinrichtung unterworfen wird.

Gemäß einer bevorzugten Ausführungsform weist das erfindungsgemäße Analysegerät eine Mehrzahl von Reagenzzugabestationen auf, die an verschiedenen Stellen um die Peripherie des Drehtisches angeordnet sind und die je wahlweise irgendeine von einer Mehrzahl von verschiedenen Reagenzflüssigkeiten dem Reaktionsbehälter zugeben können, der vom Drehtisch in einer bestimmten Position relativ zur betreffenden Reagenzzugabestation bewegt ist.

Gemäß der besonders bevorzugten Ausführungsform des erfindungsgemäßen Analysegeräts ist weiter jede Reagenzzugabestation derart eingerichtet, daß sie Reagenzflüssigkeit wahlweise irgendeinem von zwei verschiedenen Reaktionsbehältern zugeben kann, die vom Drehtisch in zwei verschiedene bestimmte Positionen relativ zur Reagenzzugabestation bewegt sind.

Durch diese bevorzugte Ausführungsform der Erfindung wird in einer vorteilhaften Weise und ohne eine wesentliche Vergrößerung des Raumbedarfs des Gerätes erreicht, daß eine noch größere Mehrzahl von verschiedenen Reagenzflüssigkeiten bei einer noch größeren Mehrzahl verschiedener Gelegenheiten der Probe in einem Reaktionsbehälter zugegeben werden können, d. h. daß eine noch größere Anzahl verschiedener Analysen durchführbar ist.

Das Gerät gemäß der Erfindung kann in zweierlei Weise betrieben werden. Einerseits kann es so gesteuert sein, daß eine bestimmte Analyse an all jenen Proben durchgeführt wird, für die diese bestimmte Analyse angefordert worden ist, und daß anschließend das Gerät automatisch neu eingestellt wird, um eine andere Analyse an all jenen Proben durchzuführen, für die diese Analyse angefordert ist usw. Diese Betriebsweise ermöglicht es, in besonders vorteilhafter Weise eine bestimmte Gesamtzahl von Proben schnell zu analysieren, wobei eine geringstmögliche Anzahl von Neueinstellung des Gerätes zwischen den verschiedenen Analysen notwendig ist, wobei nochmals ausdrücklich darauf hingewiesen werden soll, daß die Neueinstellungen beim erfindungsgemäßen Gerät automatisch erfolgen.

Das Gerät kann aber auch in einer anderen Betriebsweise betrieben werden, bei der die zugeführten Proben in einer bestimmten Reihenfolge behandelt werden und an jeder Probe der Reihe nach alle für die fragliche Probe angeforderten Analysen durchgeführt werden. Diese Betriebsweise hat gegenüber der erstgenannten den Nachteil, daß dabei die Proben langsamer behandelt werden, da das Gerät sehr häufig für eine andere Analyse automatisch neu eingestellt werden muß. Dennoch kann eine derartige Betriebsweise in speziellen Fällen vorteilhaft sein, wenn die Proben nicht in einer großen Zahl zugleich dem Gerät zugeführt werden, sondern jeweils nur eine Probe oder eine relativ kleine Zahl bei einer bestimmten Gelegenheit in das Gerät eingeführt wird.

Im folgenden wird eine bevorzugte Ausführungsform der Erfindung unter Bezugnahme auf die Zeichnungen näher beschrieben:

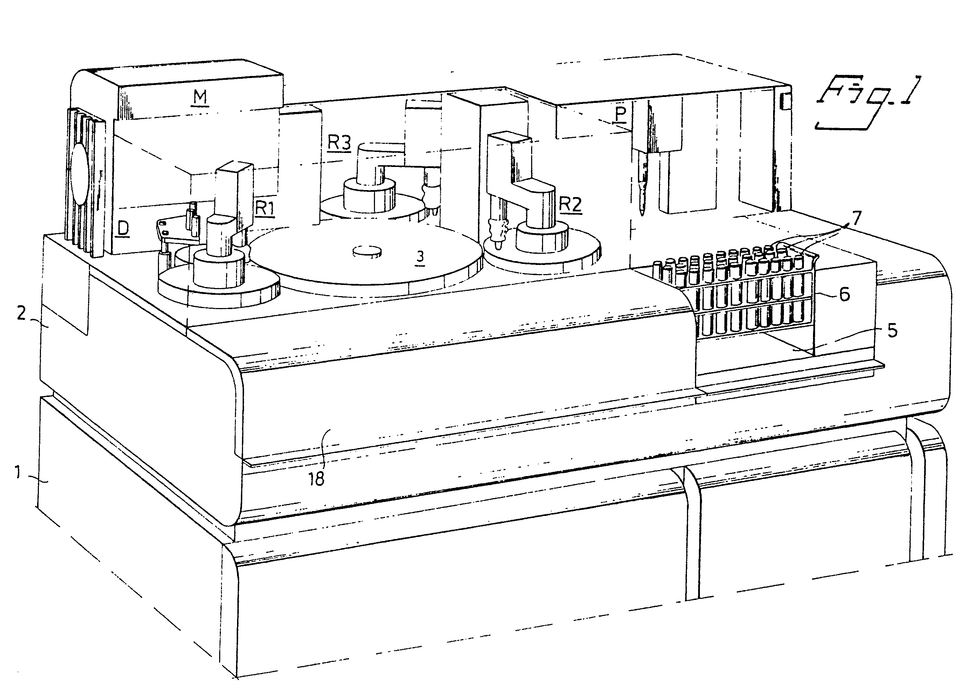

Fig. 1 zeigt schematisch in einer perspektivischen Ansicht den oberen Teil eines Analysegerätes, wobei diese Figur insbesondere die generelle Anordnung von den Teilen des Gerätes zeigt, die für die Erfindung von Interesse sind, nämlich die schrittweise antreibbare Transporteinrichtung 3 für die Reaktionsbehälter, die Probezugabestation P zur selektiven Zuführung verschiedener Proben zu den Reaktionsbehältern, die verschiedene Reagenzzugabestationen R1, R2, R3 zur selektiven Zuführung von verschiedenen Reagenzflüssigkeiten zu den Reaktionsbehältern, die Meßstation M zum Absaugen von Flüssigkeit aus den Reaktionsbehältern und zur Durchführung einer analytischen Messung an der Flüssigkeit und die Waschstation D zum Waschen der Reaktionsbehälter, nachdem die Flüssigkeit aus ihnen abgesaugt und der Meßeinrichtung zugeführt worden ist.

Fig. 2 ist eine schematische Ansicht von oben eines Analysegerätes, wie es in Fig. 1 dargestellt ist.

3

Fig. 3 ist eine schematische Darstellung des oberen Teiles eines Analysegerätes in einem Schnitt entlang der Linie III-III nach Fig. 2.

Die Zeichnung zeigt schematisch eine bevorzugte Ausführungsform des Analysegerätes, wobei nur die Teile dargestellt sind, die für die Erfindung von größerem Interesse sind. Die Zeichnung zeigt daher nicht die mechanischen und elektrischen Komponenten, die notwendig sind zum Antrieb und zur Kontrolle der Reaktionsbehältertransporteinrichtung 3, der Meßpumpen an der Probezugabestation P und den verschiedenen Reagenzzugabestationen R1, R2, R3, der verschiedenen Elemente der Waschstation D und der Halter für die Proberöhrchen, die die ursprünglichen Proben enthalten. Die Zeichnung zeigt auch nicht im einzelnen die Konstruktion der Meßstation M, an der die analytischen Messungen durchgeführt werden, noch stellt sie die programmierbaren Steuereinrichtungen dar, die dazu da sind, die verschiedenen Betriebsfolgen zu steuern und die erhaltenen Meßdaten zu verarbeiten, zu speichern und anzuzeigen. All diese Elemente des Analysegerätes können in jeder beliebigen bekannten Art und Weise gestaltet sein, wie sie einem einschlägigen Fachmann ohne weiteres zugänglich ist, wenn er die hier gegebenen Informationen bezüglich der gewünschten Betriebsweisen der verschiedenen Komponenten eines erfindungsgemäßen Analysegerätes zur gewünschten Behandlung der Proben zur Grundlage nimmt.

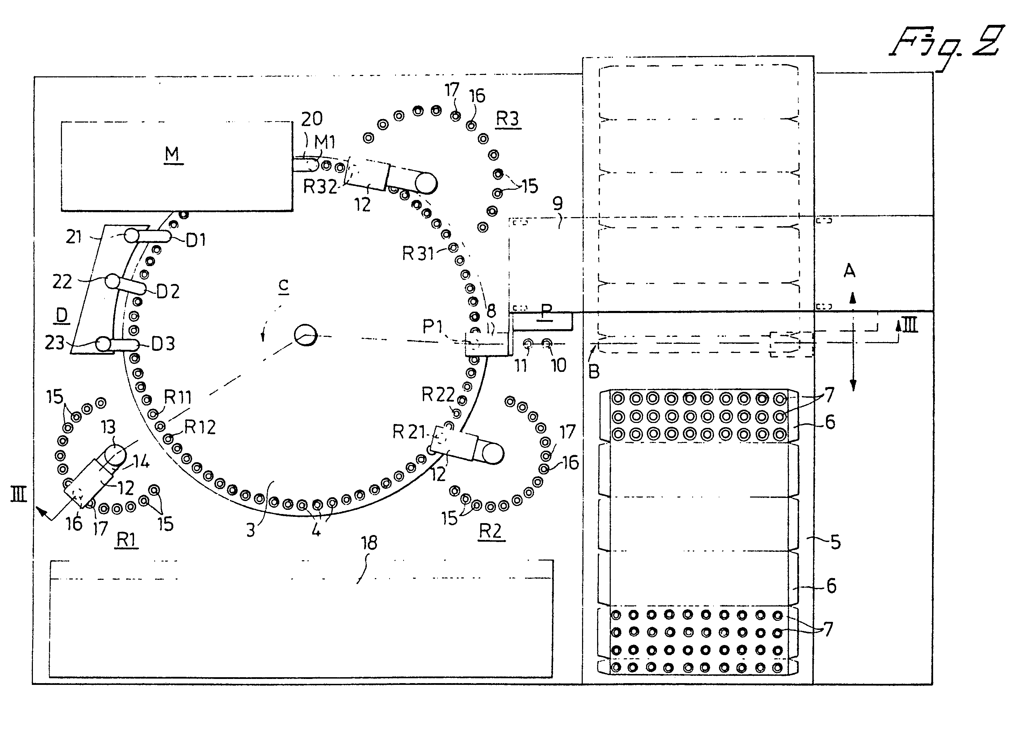

Die dargestellte Ausführungsform des Analysegerätes umfaßt ein Gehäuse 1, welches zumindest einen Teil der zuvor beschriebenen, nicht dargestellten Komponenten eines Analysegerätes einschließt. Das Gehäuse 1 hat ein Oberteil 2, das alle die Einrichtungen und Elemente beherbergt, die zur Handhabung und Behandlung der Proben notwendig sind. Auf diesem Oberteil 2 ist ein Drehtisch 3 angeordnet, der dazu eingerichtet ist, schrittweise um eine vertikale Achse zu rotieren, und zwar in einer im folgenden näher beschriebenen Art und Weise. An der Peripherie des Drehtisches 3 ist eine Vielzahl von Reaktionsbehältern 4 in gleichmäßigem Abstand voneinander angeordnet. In der dargestellten Ausführungsform sind 75 derartige Reaktionsbehälter vorgesehen. Der Drehtisch 3 kann schrittweise um einen Bogen gedreht werden, der dem durch zwei benachbarte Reaktionsbehälter 4 und die Achse des Drehtisches 3 definierten Winkel entspricht. Er kann jedoch vorteilhaft auch so eingerichtet sein, daß er bei jedem Schritt um einen Bogen bewegt wird, der einer Mehrzahl der beschriebenen Winkel entspricht, wie im folgenden noch eingehender beschrieben wird. Um den Drehtisch 3 herum sind also 75 feste Positionen vorgesehen, zu der jeder Reaktionsbehälter 4 durch schrittweises Drehen des Drehtisches 3 transportiert werden kann. Der Drehtisch 3 dient als schrittweise antreibbare Transporteinrichtung, die dazu eingerichtet ist, die Reaktionsbehälter 4 schrittweise auf einem geschlossenen Weg zu transportieren. Auf der rechten Seite des Oberteils 2 nach Fig. 1 ist eine Ausnehmung 5 angeordnet, in die ein Halter 6 für Proberöhrchen 7 eingesetzt werden kann. Jeder Halter 6 kann eine Mehrzahl von Proberöhrchen 7 halten, die in zueinander parallelen Reihen angeordnet sind. Wie in Fig. 2 dargestellt ist, kann jeder Halter 6 beispielsweise drei Reihen umfassen, deren jede zehn Proberöhrchen 7 einschließt. Selbstverständlich können jedoch Halter für eine kleinere oder größere Zahl von Proberöhrchen bzw. Reihen von Proberöhrchen benutzt werden. Die Ausnehmung 5 ist dazu eingerichtet, eine Mehrzahl von Haltern 6 aufzunehmen, beispielsweise fünf Halter mit jeweils 30 Proberöhrchen, so daß eine Gesamtzahl von 150 Proberöhrchen, jeweils mit einer Probe, in das Gerät eingesetzt werden kann. In der Ausnehmung 5 sind nicht dargestellte Elemente vorgesehen, die dazu eingerichtet sind, in einer derartigen Weise an den Haltern 6 anzugreifen, daß, kontrolliert durch eine entsprechende nicht dargestellte Steuereinrichtung, die Halter in der Ausnehmung 5 rückwärts und vorwärts bewegt werden können, in Richtung des Pfeiles A (Fig.2). Dadurch ist es möglich, daß jede beliebige Reihe von Proberöhrchen 7 in eine mit B bezeichnete Position gebracht werden kann, die einer insgesamt mit P bezeichneten Probezugabestation benachbart ist.

In der Probezugabestation P ist eine Pipette oder Meßpumpe 8 angeordnet, die dazu eingerichtet ist, an einem Schlitten 9 mit zugehöriger Antriebs- und Kontrolleinrichtung geradlinig bewegt zu werden, und zwar entlang derjenigen Reihe von Proberöhrchen 7, die sich in der Position B befindet und auch zu demjenigen Reaktionsbehälter 4 in dem Drehtisch 3, der zu dem betreffenden Zeitpunkt sich in der der Probezugabestation P zugeordneten Position P1 befindet, wie dies in Fig. 2 dargestellt ist. Die Meßpumpe 8 kann wahlweise über jedem der Proberöhrchen 7 in der in der Position B befindlichen Reihe angehalten werden und ebenso auch über dem Reaktionsbehälter 4 in der Position P1. Die Meßpumpe 8 ist dazu eingerichtet, in das Proberöhrchen 7 abgesenkt zu werden, um Probeflüssigkeit daraus anzusaugen und ein genau bestimmtes Volumen der Probeflüssigkeit in den in der Position P1 befindlichen Reaktionsbehälter 4 zu dispensieren. Folglich ist es durch entsprechende Programmierung der Steuerung der Meßpumpe 8 und der Halter 6 möglich, mit Hilfe der Meßpumpe 8 Probeflüssigkeit aus jedem beliebigen in dem Gerät vorhandenen Proberöhrchen in den Reaktionsbehälter 4 zu übertragen, der sich zu dem gegebenen Zeitpunkt in der Position P1 befindet.

Die Probezugabestation P weist weiterhin einen stationären Becher 10 auf, der dazu eingerichtet ist, ständig eine entsprechende Menge Waschflüssigkeit, beispielsweise einfaches Wasser, zu enthalten. Außerdem ist ein stationärer Abflußbecher 11 vorgesehen. Die Meßpumpe 8 kann so gesteuert werden, daß sie auch über den Bechern 10 und 11 angehalten werden kann, so daß die Pumpe Waschflüssigkeit aus dem Becher 10 ansaugen und dann die Flüssigkeit in den Abflußbecher 11 ausstoßen kann. Auf diese Weise ist es möglich, die Meßpumpe 8 zwischen den Überführungen verschiedener Proben aus den Röhrchen 7 in die Behälter 4 in dem Drehtisch 3 zu reinigen und somit

4

eine gegenseitige Verunreinigung der Proben zu verhindern.

Um den Drehtisch 3 herum sind drei Reagenzzugabestationen angeordnet, die in ihrer Gesamtheit mit den Bezugzeichen R1, R2 und R3 versehen sind. Diese Reagenzzugabestationen sind prinzipiell alle in der gleichen Weise aufgebaut und es wird aus diesem Grunde beispielhaft nur eine Station, R1, verschrieben. Die Reagenzzugabestation R1 schließt eine Pipette oder Meßpumpe 12 ein, die als Reagenzzufuhreinrichtung dient und an einem Arm 14 befestigt ist, der sich von einem Pfosten 13 weg erstreckt, so daß die Pumpe 12 auf einem Kreisbogen um den Pfosten 13 herum schwenkbar ist. Prinzipiell kann die Meßpumpe 12 von der gleichen Bauart sein, wie die Meßpumpe 8 in der Probezugabestation P. Auf dem kreisförmigen Bewegungssteg der Meßpumpe 12 ist eine Mehrzahl von stationären Bechern 15 für jeweils verschiedene Reagenzflüssigkeiten angeordnet, wobei die Anzahl dieser Becher bei der dargestellten Ausführungsform dreizehn beträgt. Der kreisförmige Bewegungsweg der Meßpumpe 12 ist außerdem so angeordnet, daß er über die beiden Reaktionsbehälter 4 in dem Drehtisch 3 führt, die sich an den mit R11 und R12 bezeichneten Positionen in Fig. 2 befinden. Die Pumpe 12 kann also durch eine entsprechend programmierte Steuerung in ihrer Bewegung so eingerichtet werden, daß sie Reagenzflüssigkeit aus einem der dreizehn Reagenzbecher 15 ansaugen und dann die Flüssigkeit in einem genau bestimmten Volumen in irgendeinen der Behälter 4 abgeben kann, der sich an der Position R11 oder an der Position R12 befindet. Weiterhin ist auf dem kreisförmigen Bewegungsweg der Pumpe 12 ein stationärer Becher 16 für Waschflüssigkeit, beispielsweise Wasser, und ein weiterer stationärer Becher 17 angeordnet, der als Abfluß dient. Dadurch ist es möglich, daß die Pumpe 12 zwischen der Übertragung zweier verschiedener Reagenzflüssigkeiten sauber gewaschen wird in einer Weise, die ähnlich ist derjenigen, die zuvor unter Bezugnahme auf die Probezufuhrpumpe 8 beschrieben wurde. Dadurch wird eine gegenseitige Verunreinigung der verschiedenen Reagenzflüssigkeiten vermieden.

In entsprechender Weise kann die Pumpe 12 der Reagenzzugabestation R2 so gesteuert werden, daß sie irgendeine beliebige der Reagenzflüssigkeiten in den dreizehn Reagenzbechern 15 in einen der Behälter 4 überträgt, die sich auf dem Drehtisch 3 befinden und zu dem jeweiligen Zeitpunkt an den Positionen R21 und R22 in Fig. 2 angeordnet sind. Die Reagenzzugabestation R3 hat nur elf Reagenzbecher 15 und die Meßpumpe 12 der Station R3 kann so gesteuert werden, daß sie Reagenzflüssigkeit aus irgendeinem der Reagenzbecher 15 in einem der beiden Reaktionsbehälter 4 überträgt, die sich zu dem betreffenden Zeitpunkt in den beiden Positionen R31 und R32 in Fig. 2 befinden.

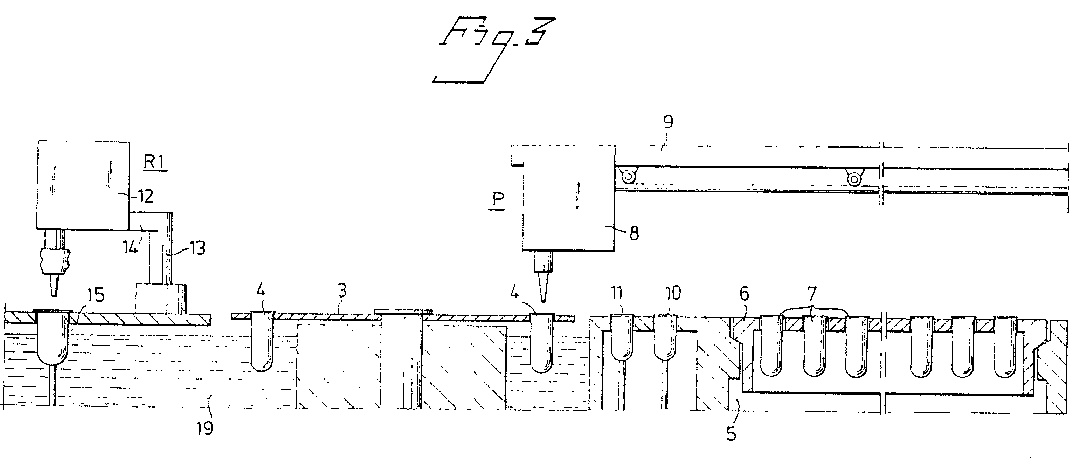

Die Reagenzflüssigkeiten werden in die Reagenzbecher 15 übertragen, wobei die Flüssigkeiten Lagerflaschen entnommen werden, die sich in einem entsprechenden Raum 18 befinden, der mit einem Deckel abgeschlossen ist und sich im vorderen Teil des Oberteils 2 des Gerätes befindet. Dieser Raum 18 kann gekühlt werden, um die Haltbarkeit der Reagenzflüssigkeit zu erhöhen, während die Reagenzbecher 15 und die Reaktionsbehälter 4 in dem Drehtisch 3 so angeordnet sind, daß sie in ein Thermostatisierungsbad 19 (siehe Fig. 3) eintauchen, so daß die Reagenzflüssigkeiten in den Bechern 15 und der Inhalt der Behälter 4 auf einer für die Analyse geeigneten Temperatur gehalten werden.

Aus diesen Ausführungen läßt sich ersehen, daß durch die drei Reagenzzugabestationen R1, R2 und R3 insgesamt 37 verschiedene Reagenzflüssigkeiten jedem der Behälter 14 in dem Drehtisch 3 zugeführt werden, und zwar bei insgesamt sechs verschiedenen Gelegenheiten während einer vollen Umdrehung des Drehtisches 3, wobei im vorliegenden Fall angenommen wird, daß sich dieser in Richtung des Pfeiles C dreht.

Auf dem Oberteil 2 des Analysegerätes ist weiterhin eine Meßstation M angeordnet, die mindestens ein Ansaugrohr 20 einschließt, das in denjenigen Behälter 4 in dem Drehtisch 3 eingeführt werden kann, der sich zu dem gegebenen Zeitpunkt in der mit M1 markierten Position in Fig. 2 befindet, um Flüssigkeit aus diesem Behälter abzusaugen, so daß die gewünschte analytische Messung an der Meßstation ausgeführt werden kann. Die Meßstation kann jede gewünschte geeignete Konstruktion haben und beispielsweise ein Photometer einschließen. Wenn die zur Durchführung der Messung in der Meßstation M benötigte Zeit länger ist als die Zeit zwischen den Transportschritten, mit denen der Drehtisch 3 weitere Behälter 4 in die Position M1 bewegt, wird die Meßstation M in besonders bevorzugter Weise mit einer Mehrzahl von parallelen, simultan arbeitenden Meßkanälen ausgerüstet, in denen verschiedene Proben, die nacheinander aus verschiedenen Reaktionsbehältern 4 abgesaugt worden sind, gemessen werden. In diesem Fall ist die Meßstation M mit einer der Zahl der Meßkanäle entsprechenden Anzahl von Ansaugrohren 20 ausgerüstet. Die Meßzeit in jedem Kanal kann bei einer derartigen Ausführungsform vorteilhafterweise um ein Mehrfaches größer sein als die Zeit zwischen zwei aufeinander folgenden Transportschritten des Drehtisches 3. Dadurch wird eine verhältnismäßig lange Meßzeit und somit eine besonders genaue Messung ermöglicht, während gleichzeitig der Drehtisch 3 verhältnismäßig schnell weiterbewegt werden kann, so daß eine große Zahl von Analysen pro Zeiteinheit möglich ist.

Zwischen der Meßstation M und der Reagenzzugabestation R1 ist eine Waschstation D angeordnet, in der diejenigen Reaktionsbehälter 4 gewaschen werden können, aus denen kurz zuvor an der Meßstation Flüssigkeit abgesaugt worden ist. Die Waschstation D umfaßt eine Absaugeinheit 21, bei der ein Absaugrohr in den Behälter 4 eingetaucht wird, der sich in der Position D21 befindet, um den Behälter von eventuell darin verbliebener Flüssigkeit zu leeren. Weiter umfaßt die Waschstation D eine Spüleinheit 22, bei der ein Spülrohr in den Behälter 4 eingeführt wird, der sich in der Position D2 befindet, um diesen Behälter mit einer Spülflüssigkeit zu spülen, beispielsweise mit Wasser. Schließlich umfaßt die Waschstation D eine Trocknungseinheit 23, die dazu eingerichtet ist, ein Trocknungsrohr in den Behälter 4 einzuführen, der sich an der Position D3 befindet, um zur Trocknung des Behälters 4 Luft in diesen einzublasen.

Der Antrieb des Drehtisches 3 kann so gesteuert werden, daß der Tisch in Schritten gedreht wird, deren jeder die Länge des Bogenmaßes hat, das den Winkel zwischen zwei benachbarten Behältern 4 einschließt, wobei dann die Meßstation M so gesteuert wird, daß sie Flüssigkeit aus jedem Behälter 4 absaugt, der in die Position M1 gelangt. Auf diese Weise kann, wie zuvor erwähnt, jeder Behälter 4 mit einer Anzahl verschiedener Reagenzflüssigkeiten versorgt werden, und zwar zu verschiedenen Zeitpunkten, die den Positionen R11, R12, R21, R22, R31 und R32 entsprechen, wobei Probenflüssigkeit zu dem Zeitpunkt zugeführt wird, der der Position P1 entspricht. Die jeweiligen Reaktionszeiten sind dann bestimmt durch die Frequenz, mit der der Drehtisch 3 schrittweise weitergeschaltet wird.

Der Drehtisch 3 und die Meßstation M können aber auch in einer solchen Weise gesteuert werden, daß ein bestimmter Reaktionsbehälter 4 nach dem Absaugen der Flüssigkeit in der Meßstation M um mehrere volle Umdrehungen des geschlossenen Weges bewegt wird, bevor wieder Flüssigkeit aus ihm entnommen wird. Dadurch ergibt sich vorteilhafterweise noch eine erheblich größere Anzahl von möglichen Gelegenheiten, bei denen die verschiedenen Reagenzflüssigkeiten zu den jeweiligen Reaktionsbehältern zugeführt werden können bzw. zu denen Probeflüssigkeit zugegeben werden kann. Dadurch ergeben sich noch weit bessere Variationsmöglichkeiten bei der Auswahl der gewünschten Reaktionszeiten, je nach den Erfordernissen der im speziellen Fall durchzuführenden Analyse.

Es ist erstrebenswert, die Zahl der Start- und Stopvorgänge des Drehtisches 3 zu reduzieren, da diese Start- und Stopvorgänge, die zur Zuführung der Proben und Reagenzien zu den Reaktionsgefäßen 4 zur Verfügung stehende Zeit vermindern und die maximale Durchsatzleistung des Gerätes reduzieren. Deswegen ist es besonders vorteilhaft, den Drehtisch dergestalt zu betreiben, daß mindestens ein Teil der Antriebsschritte einem Bogenwinkel entspricht, der eine Mehrzahl von Reaktionsbehältern einschließt, und zwar dergestalt, daß jedes Reaktionsgefäß mindestens einmal sämtliche Reagenzzugabepositionen R11, R12, R21, R22, R31 und R32, die Probezugabestation P1 und auch die Waschpositionen D1, D2 und D3 einnimmt, vorteilhafterweise jeweils mehrfach, während der Anzahl von Umdrehungen, um die die Reaktionsbehälter 4 durch den Drehtisch bewegt werden zwischen zwei aufeinander folgenden Entnahme von Flüssigkeit aus dem betreffenden Behälter 4 an der Position M1 der Meßstation M. Bei der dargestellten Ausführungsform kann der Drehtisch 3 so gesteuert werden, daß er abwechselnd Transportschritte ausführt, die dem einfachen und dem dreifachen Winkel zwischen benachbarten Reaktionsbehältern 4 entsprechen. Vorteilhafterweise wird bei der dargestellten Ausführungsform jeder Behälter 4 zwischen zwei aufeinander folgenden Absaugvorgängen an der Meßstation M1 um vier volle Umdrehungen des Drehtisches 3 bewegt. Zwei aufeinander folgende Transportschritte entsprechen dem vierfachen Winkel zwischen den Behältern 4 und der Drehtisch 3 führt während vier vollen Umdrehungen 150 Transportschritte aus. Auf diese Weise durchläuft jeder Reaktionsbehälter 4 die in der folgenden Tabelle dargestellte Folge von Schritten. Die Tabelle gibt in der linken Spalte die Nummer der verschiedenen festen Positionen an, wobei die Position M1 der Meßstation mit der Nummer 0 bezeichnet ist und die Numerierung in der Rotationsrichtung C des Drehtisches 3 fortgeführt ist. Weiter enthält die linke Spalte Informationen über die verschiedenen Bearbeitungspositionen der verschiedenen Behandlungseinheiten, d. h. der Reagenzzugabestationen R1, R2 und R3, der Probezugabestationen P, der Waschstation D und der Meßstation M. Jede der vier verbleibenden Spalten betrifft jeweils eine der vier Umdrehungen der Gesamtfolge von Transportschritten, wobei jede dieser Spalten zunächst die Anzahl der bis zu dem jeweiligen Zeitpunkt ausgeführten Transportschritte des Drehtisches 3 angibt. Weiter ist die Zeit in Minuten und Sekunden aufgeführt, die nach dem jeweiligen Transportschritt bis zum Absaugen der Flüssigkeit in der Meßposition M1 (Position Nr. 0) aus dem fraglichen Reaktionsbehälter verbleibt. Diejenigen Schrittnummern und Zeiten, bei denen die in der linken Spalte angegebenen Behandlungseinheit eine entsprechende Behandlungsoperation an dem fraglichen Reaktionsbehälter 4 ausführen kann, sind in diesen vier Spalten eingerahmt.

6

| Feste Posit. Nr. | Behandlungs- einheit/ Posit. | Umdrehung 1 Nach Schritt Nr. | Zeit bis Mess. | Umdrehung 2 Nach Schritt Nr. | Zeit bis Mess. | Umdrehung 3 Nach Schritt Nr. | Zeit bis Mess. | Umdrehung 4 Nach Schritt Nr | Zeit bis Mess |
|---|---|---|---|---|---|---|---|---|---|
| 1 |  | 1 | 12.25 | 38 | 9.20 |  |  |  |  |
| 2 |  |  |  | 39 | 9.15 | 76 | 6.10 |  |  |
| 3 |  |  |  |  |  | 77 | 6.05 | 114 | 3.00 |
| 4 |  | 2 | 12.20 |  |  |  |  | 115 | 2.55 |
| 5 |  | 3 | 12.15 | 40 | 9.10 |  |  |  |  |
| 6 |  |  |  | 41 | 9.05 | 78 | 6.00 |  |  |
| 7 |  |  |  |  |  | 79 | 5.55 | 116 | 2.50 |
| 8 |  | 1 | 12.10 |  |  |  |  | 117 | 2.45 |
| 9 |  | 5 | 12.05 | 42 | 9.00 |  |  |  |  |
| 10 |  |  |  | 43 | 8.55 | 80 | 5.50 |  |  |
| 11 |  |  |  |  |  | 81 | 5.45 | 118 | 2.40 |
| 12 | WASCH./D1 | 6 | 12.00 |  |  |  |  | 119 | 2.35 |
| 13 |  | 7 | 11.55 | 44 | 8.50 |  |  |  |  |
| 14 |  |  |  | 45 | 8.45 | 82 | 5.40 |  |  |
| 15 |  |  |  |  |  | 83 | 5.35 | 120 | 2.30 |
| 16 | WASCH./D2 | 8 | 11.50 |  |  |  |  | 121 | 2.25 |
| 17 |  | 9 | 11.45 | 46 | 8.40 |  |  |  |  |
| 18 |  |  |  | 47 | 8.35 | 84 | 5.30 |  |  |
| 19 |  |  |  |  |  | 85 | 5.25 | 122 | 2.20 |
| 20 | WASCH./D3 | 10 | 11.40 |  |  |  |  | 123 | 2.15 |
| 21 |  | 11 | 11.35 | 48 | 8.30 |  |  |  |  |
| 22 |  |  |  | 49 | 8.25 | 86 | 5.20 |  |  |
| 23 |  |  |  |  |  | 87 | 5.15 | 124 | 2.10 |
| 24 |  | 12 | 11.30 |  |  |  |  | 125 | 2.05 |
| 25 | REAG. R1/R11 | 13 | 11.25 | 50 | 8.20 |  |  |  |  |
| 26 |  |  |  | 51 | 8.15 | 88 | 5.10 |  |  |
| 27 | REAG. R1/R12 |  |  |  |  | 89 | 5.05 | 126 | 2.00 |
| 28 |  | 14 | 11.20 |  |  |  |  | 127 | 1.55 |
| 29 |  | 15 | 11.15 | 52 | 8.10 |  |  |  |  |
| 30 |  |  |  | 53 | 8.05 | 90 | 5.00 |  |  |

**Fortsetzung**

| Feste Posit. Nr. | Behandlungs-einheit/ Posit. | Umdrehung 1 | | Umdrehung 2 | | Umdrehung 3 | | Umdrehung 4 | |
|---|---|---|---|---|---|---|---|---|---|
| | | Nach Schritt Nr. | Zeit bis Mess. | Nach Schritt Nr. | Zeit bis Mess. | Nach Schritt Nr. | Zeit bis Mess. | Nach Schritt Nr. | Zeit bis Mess. |
| 31 | | | | | | 91 | 4.55 | 128 | 1.50 |
| 32 | | 16 | 11.10 | | | | | 129 | 1.45 |
| 33 | | 17 | 11.05 | 54 | 8.00 | | | | |
| 34 | | | | 55 | 7.55 | 92 | 4.50 | | |
| 35 | | | | | | 93 | 4.45 | 130 | 1.40 |
| 36 | | 18 | 11.00 | | | | | 131 | 1.35 |
| 37 | | 19 | 10.55 | 56 | 7.50 | | | | |
| 38 | | | | 57 | 7.45 | 94 | 4.40 | | |
| 39 | | | | | | 95 | 4.35 | 132 | 1.30 |
| 40 | | 20 | 10.50 | | | | | 133 | 1.25 |
| 41 | | 21 | 10.45 | 58 | 7.40 | | | | |
| 42 | | | | 59 | 7.35 | 96 | 4.30 | | |
| 43 | | | | | | 97 | 4.25 | 134 | 1.20 |
| 44 | | 22 | 10.40 | | | | | 135 | 1.15 |
| 45 | | 23 | 10.35 | 60 | 7.30 | | | | |
| 46 | | | | 61 | 7.25 | 98 | 4.20 | | |
| 47 | | | | | | 99 | 4.15 | 136 | 1.10 |
| 48 | | 24 | 10.30 | | | | | 137 | 1.05 |
| 49 | REAG. R2/R21 | 25 | 10.25 | 62 | 7.20 | | | | |
| 50 | | | | 63 | 7.15 | 100 | 4.10 | | |
| 51 | REAG. R2/R22 | | | | | 101 | 4.05 | 138 | 1.00 |
| 52 | | 26 | 10.20 | | | | | 139 | 0.55 |
| 53 | | 27 | 10.15 | 64 | 7.10 | | | | |
| 54 | | | | 65 | 7.05 | 102 | 4.00 | | |
| 55 | | | | | | 103 | 3.55 | 140 | 0.50 |
| 56 | Probe P/P1 | 28 | 10.10 | | | | | 141 | 0.45 |
| 57 | | 29 | 10.05 | 66 | 7.00 | | | | |
| 58 | | | | 67 | 6.55 | 104 | 3.50 | | |
| 59 | | | | | | 105 | 3.45 | 142 | 0.40 |
| 60 | | 30 | 10.00 | | | | | 143 | 0.35 |

**0 043 079**

Fortsetzung

| Feste Posit. Nr. | Behandlungs-einheit/ Posit. | Umdrehung 1 | | Umdrehung 2 | | Umdrehung 3 | | Umdrehung 4 | |
|---|---|---|---|---|---|---|---|---|---|
| | | Nach Schritt Nr. | Zeit bis Mess. | Nach Schritt Nr. | Zeit bis Mess. | Nach Schritt Nr. | Zeit bis Mess. | Nach Schritt Nr. | Zeit bis Mess. |
| 61 | | 31 | 9.55 | 68 | 6.50 | | | | |
| 62 | | | | 69 | 6.45 | 106 | 3.40 | | |
| 63 | REAG. R3/R31 | | | | | 107 | 3.35 | 144 | 0.30 |
| 64 | | 32 | 9.50 | | | | | 145 | 0.25 |
| 65 | | 33 | 9.45 | 70 | 6.40 | | | | |
| 66 | | | | 71 | 6.35 | 108 | 3.30 | | |
| 67 | | | | | | 109 | 3.25 | 146 | 0.20 |
| 68 | | 34 | 9.40 | | | | | 147 | 0.15 |
| 69 | | 35 | 9.35 | 72 | 6.30 | | | | |
| 70 | | | | 73 | 6.25 | 110 | 3.20 | | |
| 71 | | | | | | 111 | 3.15 | 148 | 0.10 |
| 72 | REAG. R3/R32 | 36 | 9.30 | | | | | 149 | 0.05 |
| 73 | | 37 | 9.25 | 74 | 6.20 | | | | |
| 74 | | | | 75 | 6.15 | 112 | 3.10 | | |
| 0 | Mess. M/M1 | | | | | 113 | 3.05 | 150 | 0.00 |

Wie aus der Tabelle zu ersehen ist, wird das Reaktionsbehälter 4 zunächst an den Positionen Nr. 112 (D1), Nr. 16 (D2) und Nr. 20 (D3) nach dem sechsten, achten und zehnten Transportschritt gewaschen. Weiter ist zu ersehen, daß von der Reagenzzugabestation R1 zu vier verschiedenen Gelegenheiten Reagenzflüssigkeit dem Reaktionsbehälter 4 zugeführt werden kann, nämlich nach dem Transportschritten 13, 50, 89 und 126. In ähnlicher Weise kann von der Reagenzzugabestation R2 zu vier verschiedenen Zeitpunkten Reagenzflüssigkeit dem Reaktionsbehälter zugegeben werden, nämlich nach den Transportschritten 25, 62, 101 und 138. Weiterhin kann Reagenzflüssigkeit von der Reagenzzugabestation R3 bei vier verschiedenen Gelegenheiten zugegeben werden, nämlich nach den Transportschritten 36, 107, 144 und 149. Probeflüssigkeit kann dem Reaktionsbehälter 4 aus der Probezugabestation P zu zwei verschiedenen Zeitpunkten zugegeben werden, nämlich nach den Transportschritten 28 und 141. Man erkennt leicht, daß es durch entsprechende Programmierung der Steuerung der Probezugabestation P und der drei Reagenzzugabestationen R1, R2 und R3 möglich ist, eine große Anzahl von verschiedenen Analysen durchzuführen. In der Tabelle wurde angenommen, daß das Zeitintervall zwischen zwei aufeinander folgenden Transportschritten fünf Sekunden beträgt, es können jedoch selbstverständlich auch andere Zeitintervalle gewählt werden, je nach den gewünschten Induktionszeiten. Das Zeitintervall zwischen zwei aufeinander folgenden Transportschritten muß auch nicht notwendigerweise gleich sein.

Allgemein gesprochen zeichnet sich die dargestellte bevorzugte Ausführungsform der Erfindung also dadurch aus, daß die Transportrichtung derart betreibbar ist, daß die Schrittweise der Transportschritte alternierend jeweils einem kleinen ganzzahligen Vielfachen des Abstandes zwischen den Reaktionsbehältern entspricht. Bevorzugt sind diese beiden Schrittweiten m und n jeweils kleiner oder gleich 4, wobei besonders bevorzugt eine der Schrittweiten einem Reaktionsgefäßabstand entspricht ($m = 1$). Die Zahl der Reaktionsbehälter 4 auf dem geschlossenen Weg ist durch die Summe $m + n$ nicht ganzzahlig teilbar, vorzugsweise um 1 größer oder kleiner als ein ganzzahliges Vielfaches dieser Summe. Durch eine Steuerung der Transporteinrichtung, insbesondere des Drehtisches 3, in dieser Art und Weise wird eine besonders hohe Flexibilität des Gerätes bezüglich der möglichen Reagenz- und Probezugaben erreicht, weil während mehrerer Umdrehungen des Drehtisches die Reaktionsbehälter mehrfach in die entsprechenden Positionen kommen. Dies wird bei der bevorzugten Ausführungsform erreicht, ohne daß eine zu große Zahl von Reaktionsbehältern oder eine zu große Aufent-

9

haltsdauer des Reaktionsgemisches in dem Gerät notwendig wäre. Besonders vorteilhaft ist eine Kombination dieser beschriebenen Steuerung des Transportmechanismus mit der zuvor beschriebenen mehrkanaligen Ausführungsform der Meßstation, durch die eine große Analysierung bei hoher Genauigkeit möglich wird.

Selbstverständlich kann das beschriebene automatische Analysegerät in verschiedener Art und Weise modifiziert und konstruiert werden, um für den jeweiligen Zweck besonders gut geeignet zu sein. So kann man beispielsweise die Zahl der verschiedenen Reagenzzugabestationen, ihre Positionen relativ zueinander oder zu der oder den Probezugabestationen variieren. Auch die Zahl der verschiedenen möglichen Reagenzflüssigkeiten in den Reagenzzugabestationen kann verändert werden. Weiter ist es keine Notwendigkeit, daß alle Reagenzzugabestationen die Reagenzflüssigkeit jeweils zwei verschiedenen Reaktionsbehältern 4 in dem Drehtisch 3 zuführen können, obwohl eine derartige Ausführungsform besonders vorteilhaft ist, weil sie eine hohe Selektivität ermöglicht. Es ist auch leicht zu verstehen, daß die Anzahl der Reaktionsbehälter 4 in dem Drehtisch 3 und das Transportschrittmuster des Drehtisches 3 entsprechend dem jeweiligen Zweck verändert werden können.

In der dargestellten und beschriebenen Ausführungsform werden die Reaktionsbehälter durch den Drehtisch 3 schrittweise auf einem kreisförmigen Weg transportiert, eine Konstruktion, die sich besonders durch Einfachheit auszeichnet. Selbstverständlich können jedoch auch andere Transporteinrichtungen zum Transport der Reaktionsbehälter verwendet werden. Geeignet ist beispielsweise eine endlose, schrittweise antreibbare Transportkette oder ein ähnliches Bauelement. Der Transportweg der Behälter muß folglich nicht kreisförmig sein, obwohl dies in bestimmten Fällen besonders vorteilhaft ist. Durch Auswechseln der Transportkette ist es bei einer derartigen Ausführungsform möglich, die Länge des Bewegungsweges und dessen Form zu variieren, wobei dann auch die Zahl der auf dem geschlossenen Weg vorhandenen Reaktionsbehälter verändert wird.

Schließlich erkennt der Fachmann, daß ein wie beschrieben konstruiertes Gerät am Transportweg der Reaktionsbehälter weitere Behandlungsstationen einschließen kann, beispielsweise Stationen, an denen der Inhalt der Reaktionsbehälter gerührt wird.

**Patentansprüche:**

1. Automatisches Analysegerät zur Analyse von Flüssigkeitsproben, insbesondere biologische Flüssigkeitsproben, mit
einem Drehtisch (3), der eine Mehrzahl von Reaktionsbehälter (4) trägt, die in gleichem Abstand zu einander an der Peripherie kreisförmig um die Drehachse des Drehtisches angeordnet sind,
einer Antriebsanrichtung zur schrittweisen Drehung des Drehtisches (3) in Drehschritten, die je einer ganzen Anzahl von Reaktionsbehälterabständen entsprechen,
einer Probenzugabestation (P), mindestens einer ersten Reagenzzugabestation (R1) und einer Meßstation (M), welche Probenzugabestation, Reagenzzugabestation und Meßstation an verschiedenen Stellen um die Peripherie des Drehtisches (3) angeordnet sind, wobei
die Probenzugabestation (P) eine Probenzufuhreinrichtung (8) aufweist, die eine flüssige Probe einem der Reaktionsbehälter (4) zuführen kann, wenn der Reaktionsbehälter (4) vom Drehtisch (3) in eine bestimmte Position (P1) relativ zur Probenzugabestation bewegt ist,
die Reagenzzugabestation (R1) eine Mehrzahl von stationären Reagenzbechern (15) für verschiedene Reagenzflüssigkeiten und eine Reagenzzufuhreinrichtung (12) einschließt,
die Meßstation (M) eine Meßeinrichtung einschließt zum Messen einer für die Analyse relevanten Eigenschaften der Flüssigkeit in einem der Reaktionsbehälter (4), wenn der Reaktionsbehälter (4) von Drehtisch (3) in eine bestimmte Position (M1) relativ zu der Meßstation (M) bewegt ist, und
die Probenzugabestation (P) eine Haltevorrichtung (6) für eine Mehrzahl von Probebehältern (7) für verschiedene flüssige Proben einschließt,
dadurch gekennzeichnet, daß Steuereinrichtungen vorgesehen sind, mittels derer die Probenzufuhreinrichtungen (8) derart gesteuert ist, daß sie eine flüssige Probe wahlweise von jedem beliebigen aus der Mehrzahl von Probebehältern (7) dem Reaktionsbehälter (4) zuführen kann,
mittels derer die Reagenzzugabestation (R1) derart gesteuert ist, daß sie die Reagenzflüssigkeit wahlweise von jedem beliebigen der Reagenzbecher (15) einem der Reaktionsbehälter (4) zuführen kann, wenn der Reaktionsbehälter (4) vom Drehtisch (3) in eine bestimmte Position (R11) relativ zu der Reagenzzugabestation (R1) bewegt ist, und mittels derer die Antriebseinrichtung des Drehtisches (3) und die Meßeinrichtung der Meßstation (M) derart gesteuert sind, daß jeder Reaktionsbehälter (4) vom Drehtisch (3) durch eine Mehrzahl von vollständigen Umdrehungen des Drehtisches (3) bewegt wird, bevor die in dem Reaktionsbehälter (4) befindliche Flüssigkeit der analytischen Messung durch die Meßeinrichtung unterworfen wird, und zwar so, daß jeder Reaktionsbehälter während dieser Mehrzahl von Umdrehung des Drehtisches (3) mindestens zweimal in eine solche Position relativ zu der Probenzugabestation (P) bzw. der Reagenzzugabestation (R1) gebracht wird, die es ermöglicht, Probenflüssigkeit bzw. Reagenzflüssigkeit dem Reaktionsbehälter (4) zuzugeben, und daß die Probenzugabestation (P) und die Reagenzzugabestation (R1) Probeflüssigkeit bzw. Reagenzflüssigkeit jedem der verschiedenen Reaktionsbehälter (4) zu mindestens zwei verschiedenen Zeitpunkten zugeben kann, bevor die Flüssigkeit in dem Reaktionsbehälter (4) der analytischen Messung durch die Meßeinrichtung (M) unterworfen wird.

2. Analysegerät nach Anspruch 1, dadurch gekennzeichnet, daß es eine Mehrzahl von Reagenzzugabestationen (R1, R2, R3) einschließt, die wie die erste Reagenzzugabestation (R1) ausgebildet sind und die an verschiedenen Stellen um die Peripherie des Drehtisches (3) angeordnet sind.

3. Analysegerät nach Anspruch 2, dadurch gekennzeichnet, daß wenigstens eine Reagenzzugabestation (R3), in Drehrichtung (C) des Drehtisches (3) gesehen, hinter der Probenzugabestation (P) aber vor der Meßstation (M) angeordnet ist, und daß wenigstens eine andere Reagenzzugabestation (R1), in Drehrichtung (C) des Drehtisches (3) gesehen, vor der Probenzugabestation (P) aber hinter der Meßstation (M) angeordnet ist.

4. Analysegerät nach einem der Ansprüche 1 bis 3, dadurch gekennzeichnet, daß die Reagenzzufuhreinrichtung (12) jeder Reagenzzugabestation (R1, R2, R3) eine Meßpumpe (12) einschließt, die Flüssigkeit in ein Ansaugrohr ansaugen und danach wieder in einem genau bestimmten Volumen dispensieren kann, wobei das Ansaugrohr der Meßpumpe (12) in kontrollierter Weise in Positionen über den stationären Reagenzbechern (15) bewegbar ist, um aus jedem der Reagenzbecher (15) wahlweise Reagenzflüssigkeit anzusaugen, und in die bestimmte Position (R11, R12; R21, R22; R31, R32) relativ zur Reagenzzugabestation, in welche der Drehtisch (3) einen Reaktionsbehälter (4) bewegt hat, bewegbar ist, um die Flüssigkeit in den Reaktionsbehälter (4) zu dispensieren.

5. Analysegerät nach Anspruch 4, dadurch gekennzeichnet, daß das Ansaugrohr der Meßpumpe (12) jeder Reagenzzugabestation (R1, R2, R3) in eine Position wahlweise über irgend einen von zwei verschiedenen Reaktionsbehältern (4) bewegbar ist, die von dem Drehtisch (3) in zwei verschiedene bestimmte Positionen (R11, R12; R21, R22; R31, R32) relativ zur Reagenzzugabestation bewegt sind, um Reagenzflüssigkeit in den einen oder anderen dieser beiden Reaktionsbehälter (4) zu dispensieren.

6. Analysegerät nach einem der Ansprüche 4 und 5, dadurch gekennzeichnet, daß jede Reagenzzugabestation (R1, R2, R3) auch einen stationären Waschbecher (16) für eine Waschflüssigkeit und einen stationären Abwasserabfluß (17) einschließt, und daß das Ansaugrohr der Meßpumpe (12) dazu eingerichtet ist, in eine Position über dem Waschbecher (16) bewegt zu werden, um Waschflüssigkeit daraus anzusaugen, und in eine Position über dem Abwasserabfluß (17) bewegt zu werden, um den Pumpeninhalt in diesen zu entleeren.

7. Analysegerät nach einem der Ansprüche 4 bis 6, dadurch gekennzeichnet, daß das Ansaugrohr der Meßpumpe (12) jeder Reagenzzugabestation (R1, R2, R3) auf einem Kreisbogen bewegbar ist.

8. Analysegerät nach einem der Ansprüche 1 bis 7, dadurch gekennzeichnet, daß die Probenzugabestation (P) eine Meßpumpe (8) einschließt, die Flüssigkeit in ein Ansaugrohr ansaugen und ein genau bestimmtes Volumen der Flüssigkeit wieder dispensieren kann, und daß das Ansaugrohr der Pumpe (8) in kontrollierbarer Weise in Positionen über den Probenbehältern (7) bewegbar ist, um selektiv aus irgendeinem dieser Probenbehälter (7) Probeflüssigkeit abzusaugen, und zu der bestimmten Position (P1) relativ zur Probenzugabestation (P) über einem Reaktionsbehälter (4), der vom Drehtisch (3) dorthin bewegt ist, bewegbar ist, um die angesaugte Probenflüssigkeit in diesen Reaktionsbehälter zu dispensieren.

9. Analysegerät nach Anspruch 8, dadurch gekennzeichnet, daß das Ansaugrohr der Meßpumpe (8) der Probenzugabestation (P) auf einem geradlinigen Weg bewegbar ist, entlang dem die Probenbehälter (7) angeordnet sind.

10. Analysegerät nach Anspruch 9, dadurch gekennzeichnet, daß der Probenhalter (6) für eine Mehrzahl von Reihen von Probenbehältern (7) ausgebildet ist, welche Reihen von Probenbehältern (7) sich parallel zum Bewegungsweg des Ansaugrohres der Meßpumpe (8) erstrecken, wobei der Probenhalter (6) derart kontrolliert bewegbar ist, daß selektiv jede beliebige der Reihen von Probenbehältern (7) in eine Position gebracht werden kann, die mit dem Bewegungsweg des Ansaugrohrs der Meßpumpe (8) übereinstimmt.

11. Analysegerät nach einem der Ansprüche 8 bis 10, dadurch gekennzeichnet, daß die Probenzugabestation (P) auch einen stationären Behälter (10) für eine Waschflüssigkeit und einen stationären Abwasserfluß (11) einschließt, und daß das Ansaugrohr der Meßpumpe (8) über dem Waschflüssigkeitsbehälter (10) bewegbar ist, um Waschflüssigkeit daraus anzusaugen, und in eine Position über dem Abwasserfluß (11) bewegbar ist, um den Pumpeninhalt in diesen zu entleeren.

12. Analysegerät nach einem der Ansprüche 1 bis 11, dadurch gekennzeichnet, daß die Antriebsschritte des Drehtisches (3) alternierend m und n Reaktionsbehälterabständen entsprechen, wobei m und n verschiedene ganze Zahlen sind und die Gesamtzahl der Reaktionsbehälter (4) durch die Summe m + n nicht ganzteilig teilbar ist.

13. Analysegerät nach einem der Ansprüche 1 bis 12, dadurch gekennzeichnet, daß die Meßstation (M) eine Absaugeinrichtung (20) einschließt, durch die die Flüssigkeit aus dem Reaktionsbehälter (4), der in die bestimmte Position (M1) relativ zur Meßstation (M) von dem Drehtisch (3) bewegt ist, abgesaugt und der Meßeinrichtung zugeführt werden kann, und daß die Meßeinrichtung mehrere unabhängige, sequentiell arbeitende Meßkanäle aufweist, zu denen Flüssigkeiten übertragen werden, die aus Reaktionsbehältern abgesaugt sind, die nacheinander in die bestimmte Position bewegt sind.

14. Analysegerät nach einem der Ansprüche 1 bis 13, dadurch gekennzeichnet, daß es eine Waschstation (D) einschließt, die an der Peripherie des Drehtisches (3) hinter der Meßstation (M), in der

11

Drehrichtung (C) des Drehtisches gesehen, aber vor der nächsten Reagenzzugabestation (R1) angeordnet ist, wobei diese Waschstation (D) Einrichtungen (21, 22, 23) einschließt, um jeden Reaktionsbehälter (4) zu waschen, wenn dieser die Waschstation (D) zum ersten Mal nach der Messung in der Meßstation (M) passiert.

15. Analysegerät nach Anspruch 14, dadurch gekennzeichnet, daß die Waschstation (D) eine Absaugeinheit (21) zum Absaugen von in dem Reaktionsbehälter (4) verbliebener Flüssigkeit, wenn der Reaktionsbehälter sich in einer ersten bestimmten Position (D1) befindet, eine Spüleinheit (22) zum Spülen des Reaktionsbehälters (4) mit einer Spülflüssigkeit, wenn der Reaktionsbehälter (4) sich in einer zweiten bestimmten Position (D2) befindet; und eine Trocknungseinheit (23) zum Trocknen des Reaktionsbehälters (4), wenn der Reaktionsbehälter (4) sich in einer dritten bestimmten Position (D3) befindet, einschließt.

**Claims**

1. An automatic analysis apparatus for analysing liquid samples, particularly biological liquid samples, including
a turntable (3) carrying al plurality of reaction containers (4) mutually uniformly spaced at the periphery circularly around the rotational axis of the turntable,
a drive means for stepwise rotation of the turntable (3) through rotations steps each corresponding to a whole number of reaction container spacings,
a sample supply station (P), at least a first reagent supply station (R1) and a measuring station (M), said sample supply station, reagent supply station and measuring station being arranged at different locations around the periphery of the turntable (3), wherein
the sample supply station (P) exihibits a sample supply means (8) capable of supplying a liquid sample to one of the reaction containers (4) when the reaction container (4) is moved by the turntable (3) into a given position (P1) relative to the sample supply station,
the reagent supply station (R1) includes a plurality of stationary reagent cups (15) for different reaction liquids and a reagent supply means (12),
the measuring station (M) includes a measuring means for measuring a property relevant to the analysis of the liquid in one of the reaction containers (4) whenn the reaction container (4) is moved by the turntable (3) into a given position (M1) relative to the measuring station (M), and
the sample supply station (P) includes a holder means (6) for a plurality of sample containers (7) for different liquid samples,
characterized in that control means are provided, by means of which the sample supply means (8) is controlled so as to be able to supply a liquid sample selectively from any one of said plurality of sample containers (7) to the reaction container (4),
by means of which the reagent supply station (R1) is so controlled that it is able to supply the reagent liquid selectively from any one of the reagent cups (15) to one of the reaction containers (4) when the reaction container (4) is moved by the turntable (3) into a given position (R11) relative to the reagent supply station (R1), and
by means of which the drive means for the turntable (3) and the measuring means of the measuring station (M) are controlled in a manner such that each reaction container (4) is moved by the turntable (3) through a plurality of complete turns of the turntable (3) before the liquid present in the reaction container (4) is subjected to an analytic measuring operation by the measuring means and more specifically so that each reaction container during said plurality of turns of the turntable (3) is at least twice brought into a position relative to the sample supply station (P) and the reagent supply station (R1), respectively, permitting sample liquid and reagent liquid, respectively, to be supplied to the reaction container (4), and so that the sample supply station (P) and the reagent supply station (R1) are able to supply sample liquid and reagent liquid, respectively, to each of the different reaction containers (4) on at least two different occasions before the liquid in said reaction container (4) is analytically measured by the measuring means (M).

2. An analysis apparatus according to Claim 1, characterized in that it includes a plurality of reagent supply stations (R1, R2, R3), which are similar in disign to said first reagent supply station (R1) and are arranged at different locations around the periphery of the turntable (3).

3. An analysis apparatus according to Claim 2, characterized in that at least one reagent supply station (R3) is located after the sample supply station (P) but before the measuring station (M) as seen in the direction (C) of rotation of the turntable (3), and that at least one other reagent supply station (R1) is located before the sample supply station (P) but after the measuring station (M) as seen in the direction (C) of rotation of the turntable (3).

4. An analysis apparatus according to any one of Claims 1 to 3, characterized in that the reagent supply means (12) of each reagent supply station (R1, R2, R3) includes a metering pump (12) capable of drawing liquid into a suction tube and subsequently again dispensing the liquid in an accurately determined volume, said suction tube of the metering pump (12) being controllably movable to positions above the stationary reagent cups (15) for selective removal by suction of reagent liquid from any one of the reagent cups (15), and to the given position (R11, R12; R21, R22; R31, R32) relative to the reagent supply station into which the turntable (3) has moved a reaction container (4) for dispensing the liquid into the reaction container (4).

5. An analysis apparatus according to Claim 4, characterized in that the suction tube of the metering pump (12) of each reagent supply station (R1, R2, R3) is selectively movable to a position above either one of two different reaction containers (4), which are moved by the turntable (3) into two different given positions (R11, R12; R21, R22; R31, R32) relative to the reagent supply station, for dispensing reagent liquid into one or the other of these two reaction containers (4).

6. An analysis apparatus according to any one of Claims 4 and 5, characterized in that each reagent supply station (R1, R2, R3) also includes a stationary wash cup (16) for a washing liquid and a stationary waste outlet (17), and that the suction tube of the metering pump (12) is adapted to be moved to a position above the wash cup (16) for withdrawing washing liquid therefrom and to a position above the waste outlet (17) for emptying the contents of the pump thereinto.

7. An analysis apparatus according to one of Claims 4 to 6, characterized in that the suction tube of the metering pump (12) of each reagent supply station (R1, R2, R3) is movable in a circular path.

8. An analysis apparatus according to any one of Claims 1 to 7, characterized in that the sample supply station (P) includes a metering pump (8) capable of drawing liquid into a suction tube and again dispensing an accurately determined volume of the liquid, and that the suction tube of the pump (8) is controllably movable to positions above the sample containers (7) for selective removal by suction of sample liquid from any one of these sample containers (7), and to the given position (P1) relative to the sample supply station (P) above a reaction container (4) moved there by the turntable (3), for dispensing the withdrawn sample liquid into this reaction container.

9. An analysis apparatus according to Claim 8, characterized in that the suction tube of the metering pump (8) of the sample supply station (P) is movable in a rectilinear path, along which the sample containers (7) are located.

10. An analysis apparatus according to Claim 9, characterized in that the sample holder (6) is designed for a plurality of rows of sample containers (7), which rows of sample containers (7) extend parallel with the path of movement of the suction tube of the metering pump (8), the sample holder (6) being controllably movable in a manner such that any one of the rows of sample containers (7) can be selectively brought into a position in alignment with the path of movement of the suction tube of the metering pump (8).

11. An analysis apparatus according to any on of Claims 8 to 10, characterized in that the sample supply station (P) also includes a stationary container (10) for a washing liquid and a stationary waste outlet (11), and that the suction tube of the metering pump (8) is movable above the washing liquid container (10) for withdrawing liquid by suction therefrom and to a position above the waste outlet (11) for emptying the contents of the pump thereinto.

12. An analysis apparatus according to any one of Claims 1 to 11, characterized in that the drive steps of the turntable (3) correspond alternatingly to m and n reaction cotainer spacings, where m and n are different whole numbers and the total number of the reaction containers (4) is not divisible by the sum m + n.

13. An analysis apparatus according to any one of Claims 1 to 12, characterized in that the measuring station (M) includes a suction means (20) by which the liquid can be withdrawn from the reaction container (4), which has been moved by the turntable (3) to the given position (M1) relative to the measuring station (M), and supplied to the measuring means, and that the measuring means has several independant, sequentially operating measuring channels to which the liquids withdrawn from the reaction containers moved sequentially into the given position are transferred.

14. An analysis apparatus according to any one of Claims 1 to 13, characterized in that it includes a washing station (D) which is located at the periphery of the turntable (3) after the measuring station (M) as seen in the direction (C) of rotation of the turntable but before the next reagent supply station (R1), said washing station (D) including means (21, 22, 23) for washing each reaction container (4) as it passes the washing station (D) for the first time subsequent to the measuring operation in the measuring station (M).

15. An analysis apparatus according to Claim 14, characterized in that the washing station (D) includes a suction unit (21) for withdrawing by suction residual liquid in the reaction container (4) when the reaction container is located in a first given position (D1), a rinsing unit (22) for rinsing the reaction container (4) with a rinsing liquid when the reaction container (4) is located in a second given position (D2), and a drying unit (23) for drying the reaction container (4) when the reaction container (4) is located in a third given position (D3).

**Revendications**

1. Analyseur automatique pour l'analyse d'échantillons liquides, et en particulier d'échantillons de liquides biologiques, comprenant un plateau tournant (3) supportant une pluralité de tubes réaction (4) disposés à égale distance les uns des autres en forme de cercle sur la périphérie, autour de l'axe de rotation du plateau tournant, un dispositif d'entraînement pour la rotation pas-à-pas du plateau tournant (3) par pas de rotation dont chacun d'eux correspond à un nombre entier d'espacement des tubes de réaction, une station d'addition d'échantillon (P), au minimum une première station d'addition de réactif (R1) et une station de mesure (M), où lesdites stations d'addition d'échantillon, d'addition de réactif et de mesure sont disposées en différents emplacements sur la périphérie du plateau tournant (3), la station d'addition d'échantillon (P) comporte un dispositif d'alimentation d'échantillon (8) pouvant verser un échantillon de liquide dans l'un des tubes de réaction (4) quand le tube de réaction (4) du plateau tournant (3) est déplacé dans une position déterminée (P1) par rapport à la station d'addition d'échantillon, la station d'addition de réactif (R1) comprend une pluratité d'éprouvettes fixes (15) pour divers réactifs liquides et un dispositif d'alimentation de réactif (12), la station de mesure (M) comprend un dispositif de mesure pour mesurer l'une des caractéristiques du liquide, importante pour l'analyse, dans un tube de réaction (4) quand le tube de réaction du plateau tournant (3) est déplace dans une position déterminée (M1) par rapport à la station de mesure (M), et la station d'alimentation d'échantillon (P) comprend un dispositif de support (6) d'une pluralité d'éprouvettes d'échantillon (7) pour divers échantillons liquide, caractérisé en ce qu'il est pourvu d'un dispositif de commande grâce auquel le dispositif d'alimentation d'échantillon (8) est commandé de telle sorte qu'il peut transférer un échantillon liquide au choix de chacune des éprouvettes de la pluralité d'éprouvettes d'échantillon (7) dans le tube de réaction (4), ce qui fait que la station d'addition réactif (R1) est commandée de façon à envoyer le réactif liquide au choix de l'une des éprouvettes de réaction (15) dans le tube de réaction (4) quand ce tube (4) du plateau tournant (3) est déplacé dans une position déterminée (R11) par rapport à la station d'addition de réactif (R1), grâce à quoi le dispositif d'entraînement du plateau tournant (3) et le dispositif de mesure de la station de mesure (M) sont commandés de telle sorte que chaque tube de réaction (4) du plateau tournant (3) est déplace d'une pluralité de rotations complètes du plateau tournant (3) avant que le liquide qui se trouve dans le récipient (4) ne soit soumis à une mesure analytique par le dispositif de mesure, ce qui fait que chaque tune de réaction, pendant cette pluralité de rotations du plateau tournant (3) est amené deux fois au minimum dans une position telle par rapport à la station d'addition d'échantillon (P) ou la station d'addition de réactif (R1) qu'il est possible d'additionner l'échantillon liquide ou le réactif liquide dans le tube de réaction (4) et que la station d'addition d'échantillon (P) et la station d'addition de réactif (R1) peuvent verser l'échantillon liquide ou le réactif liquide dans chacun des différents tubes de réaction (4), au minimum en deux temps différents avant que le liquide du tube (4) ne soit soumis à une mesure analytique par le dispositif de mesure (M).

2. Analyseur selon revendication 1, caractérisé en ce qu'il comprend une pluralité de stations d'addition de réactif (R1, R2, R3), réalisées comme la première station d'addition de réactif (R1), montées en différents emplacements sur la périphérie du plateau tournant (3).

3. Analyseur selon revendication 2, caractérisé en ce qu'une station d'addition de réactif (R3) au moins, vue dans le sens de rotation (C) du plateau tournant (3), est montée derrière la station d'addition d'échantillon (P) mais avant la station de mesure (M) et qu'au moins une autre station d'addition de réactif (R1), vue dans le sens de rotation (C) du plateau tournant (3), est montée avant la station d'addition d'échantillon (P) mais derrière la station de mesure (M).

4. Analyseur selon revendication 1 à 3, caractérisé en ce que le dispositif d'alimentation de réactif (12) de chaque station d'addition de réactif (R1, R2, R3) comprend une pompe de dosage (12) qui pompe le liquide dans un tuyau d'aspiration et peut le refouler ensuite à nouveau en un volume déterminé avec précision grâce à quoi le tuyau d'aspiration de la pompe de dosage (12) peut se déplacer de façon contrôlée en position au dessus des eprouvettes fixes (15) afin d'aspirer le réactif liquide de chacune des éprouvettes (15) au choix et de verser le liquide dans le tube de réaction (4) dans la position donnée (R11, R12, R21, R22, R31, R32) par rapport à la station d'addition de réactif où le plateau tournant (3) an amené un tube de réaction (4).

5. Analyseur selon revendication 4, caractérisé en ce que le tuyau d'aspiration de la pompe de dosage (12) de chaque station d'addition de réactif (R1, R2, R3) est mobile dans une position au choix sur l'un quelconque des deux différents tubes de réaction (4) qui sont déplacés par le plateau tournant (3) en deux positions différentes déterminées (R11, R12, R21, R22, R31, R32) par rapport à la station d'addition de réactif afin de verser le réactif liquide dans l'un ou l'autre de ces deux tubes de réaction (4).

6. Analyseur selon revendication 4 ou 5, caractérisé en ce que chaque station d'addition de réactif (R1, R2, R3) comprend également un godet de lavage fixe (16) de liquide de lavage et une vidange d'eau usée fixe (17) et que le tuyau d'aspiration de la pompe de dosage (12) est disposé de manière à pouvoir être déplacé dans une position au dessus du godet de lavage (16) afin d'y pomper du liquide de lavage et être déplacé dans une position située au dessus de la vidange d'eau usée (17) afin de verser dans celle-ci le contenu de la pompe.

7. Analyseur selon revendication 4 à 6, caractérisé en ce que le tuyau d'aspiration de la pompe de dosage (12) de chaque station d'addition de réactif (R1, R2, R3) est mobile en arc de cercle.

8. Analyseur selon l'une des revendications 1 à 7, caractérisé en ce que la station d'addition d'échantillon (P) comprend une pompe de dosage (8) qui pompe le liquide dans un tuyau d'aspiration et peut refouler à nouveau un volume de liquide déterminé avec précision, le tuyau d'aspiration de la pompe (8) est mobile de façon contrôlée en position sur les éprouvettes d'échantillon (7) afin d'aspirer sélectivement de l'échantillon liquide de l'une quelconque des ces éprouvettes (7) et est déplacé dans la position déterminée (P1) par rapport à la station d'addition d'échantillon (P) sur un tube de réaction (4) avancé là bas par le plateau tournant (3) afin de verser l'échantillon liquide aspiré dans ledit tube de réaction (4).

9. Analyseur selon revendication 8, caractérisé en ce que le tuyau d'aspiration de la pompe de dosage (8) de la station d'addition d'échantillon (P) est mobile dans un trajet en ligne droite le long duquel les éprouvettes d'échantillon (7) ont été disposées.

10. Analyseur selon revendication 9, caractérisé en ce que le porte-éprouvettes (6) est prévu pour une pluralité de rangées d'éprouvettes d'échantillon (7), où les rangées d'éprouvettes (7) sont disposées parallèlement au sens du mouvement du tuyau d'aspiration de la pompe de dosage (8) de telle sorte que le porte-éprouvettes (6) peut être contrôlé de façon mobile, que chaque rangée désirée d'éprouvettes d'échantillon (7) peut être amenée sélectivement dans une position qui corresponde à la course du tuyau d'aspiration de la pompe de dosage (8).

11. Analyseur selon revendication 8 à 10, caractérisé en ce que la station d'addition d'échantillon (P) comprend également un récipient de liquide de lavage fixe (10) et une vidange fixe d'évacuation d'eaux usées (11) et que le tuyau d'aspiration le la pompe de dosage (8) est mobile sur le récipient de liquide de lavage (10) afin d'aspirer du liquide de lavage de celui-ci et peut se déplacer en position au dessus de la vidange des eaux usées (11) afin de vider dans celle-ci le contenu de la pompe.

12. Analyseur selon l'une des revendications 1 à 11, caractérisé en ce que les pas d'entraînement alternés du plateau tournant (3) correspondent aux m et n intervalles des tubes de réaction, de telle sorte que m et n soient des nombres entiers différents et que le nombre total de tubes de réaction (4) ne soit pas divisible en un nombre entier par la somme m + n.

13. Analyseur selon l'une des revendications 1 à 12, caractérisé en ce que la station de mesure (M) comprend un dispositif d'aspiration (20), grâce auquel le liquide du tube de réaction (4) déplacé dans la position donnée (M1) par rapport à la station de mesure (M) par le plateau tournant est aspiré et peut être introduit dans le dispositif de mesure, et le dispositif de mesure comprend plusieurs canaux de mesure indépendants fonctionnant séquentiellement, vers lesquels les liquides aspirés des tubes de réaction sont transférés et amenés l'un après l'autre dans une position déterminée.

14. Analyseur selon l'un des revendication 1 à 13, caractérisé en ce qu'il comprend une station de lavage (D), montée à la périphérie du plateau tournant (3), derière la station de mesure (M) en regardant dans le sens de rotation (C) du plateau tournant, mais avant la station d'addition de réactif suivante (R1), où cette station de lavage (D) comprend les dispositifs (21, 22, 23) afin de laver chaque tube de réaction (4) quand celui-ci passe devant la station de lavage (D) pour la premiere fois apres la mesure faite dans la station de mesure (M).

15. Analyseur selon revendication 14, caractérisé en ce que la station de lavage (D) comprend un module d'aspiration (21) pour aspirer d'un tube de réaction (4) le liquide residu quand ledit tube (4) se trouve dans une première position (D1) déterminée, un module de lavage (22) pour le lavage du tube de réaction (4) avec un liquide de lavage quand ledit tube (4) se trouve dans une seconde position (D2) déterminée, et un module de séchage (23) pour sécher le tube de réaction (4) quand ledit tube (4) se trouve dans une troisième position déterminée (D3).

Fig.1

Fig. 2

*Fig.3*